Europäisches Patentamt

(19) European Patent Office

Office européen des brevets

(11) Publication number: **0 216 963**
**B1**

(12) **EUROPEAN PATENT SPECIFICATION**

(45) Date of publication of the patent specification:
**30.08.89**

(21) Application number: **85305662.0**

(22) Date of filing: **09.08.85**

(51) Int. Cl.⁴: **B60K 15/02**

(54) **Apparatus for transferring fuel between vehicles.**

(43) Date of publication of application:
**08.04.87 Bulletin 87/15**

(45) Publication of the grant of the patent:
**30.08.89 Bulletin 89/35**

(84) Designated Contracting States:
**BE DE FR GB IT NL**

(56) References cited:
**US-A- 2 634 927**
**US-A- 3 199 553**
**US-A- 3 814 148**
**US-A- 4 535 826**

(73) Proprietor: **Bell, Edward D., 5896 Denny Avenue, North Hollywood California 91601(US)**

(72) Inventor: **Bell, Edward D., 5896 Denny Avenue, North Hollywood California 91601(US)**

(74) Representative: **Enskat, Michael Antony Frank et al, Michael A. Enskat & Co. 9, Rickmansworth Road, Watford Hertfordshire WD1 7HE(GB)**

ACTORUM AG

## Description

The present invention relates to apparatus for transferring fuel between vehicles for example between military armoured vehicles where the apparatus allows refuelling quickly on any terrain without exposing personnel to enemy fire or chemical agents.

Armoured vehicles, such as tanks, have for many years been refuelled by vehicles which were unarmoured and unable to go where the armoured vehicle could go. Because of this unequal mobility, the tank and the refueller had to rendezvous at some accessible area for the refuelling. The actual refuelling was performed by men dismounting from their vehicles, dragging hoses from the refueller to the tank, where numerous caps were opened and the fuel directed in.

Recently, some vehicles are available as refuellers which have better terrain mobility, but which are still unarmoured and require manual operation of the refuelling.

Still more recently, but not yet in operation, a vehicle is being developed which has high mobility and armour, but which still requires stationary manual operation of the refuelling.

None of these refuelling arrangements avoid the stationary manual operation of refuelling. It is an object of the invention to provide a solution to this problem.

According to the present invention there is provided apparatus for remotely transferring fuel between vehicles comprising the combination of: a mobile storage or tanker vehicle for storing liquid fuel and; a mobile fuel consuming vehicle; said storage vehicle having fuel dispensing means including an elongate pivotal telescopic boom outwardly cantilevered from a selected end portion of said storage vehicle and terminating at its free end in a nozzle configured for remote operation; a remotely operable cover for enclosing said nozzle and resiliently carried on said boom, said cover including a pair of doors having open and closed positions and being responsive to control means for exposing and covering said nozzle; said fuel consuming vehicle has a receptacle at a selected end thereof for receiving said exposed nozzle to enable the transfer of fuel from said storage vehicle in a remote manner; said boom including a probe about said nozzle for engaging said receptacle and actuation means responsive to said probe engaging said receptacle to initiate the transfer of fuel; said actuation means including magnetic field producing means in said receptacle and a magnetic sensor in said boom probe.

The apparatus to be described permits one armoured vehicle to approach, connect with, and rapidly refuel another, in a totally hostile environment. Through the use of electronic components in both vehicles, fuel only flows when proper connection is made, and the receiving vehicle has space for more fuel. When the receiving vehicle is full, fuel flow stops.

Apparatus for transferring fuel between vehicles will now be described, by way of example, with reference to the accompanying drawings, in which:

Figure 1 is a side elevation of two armoured vehicles coupled by the apparatus for the purpose of transferring fuel;

Figure 2 is an enlarged side elevation view of the extended boom of the apparatus which is shown compressed in Figure 1;

Figure 3 is an enlarged side elevational view of the receptacle shown open in Figure 1; and

Figure 4 is an enlarged side elevation cut-away view of the boom probe and cover of the apparatus as shown in Figures 1 and 2.

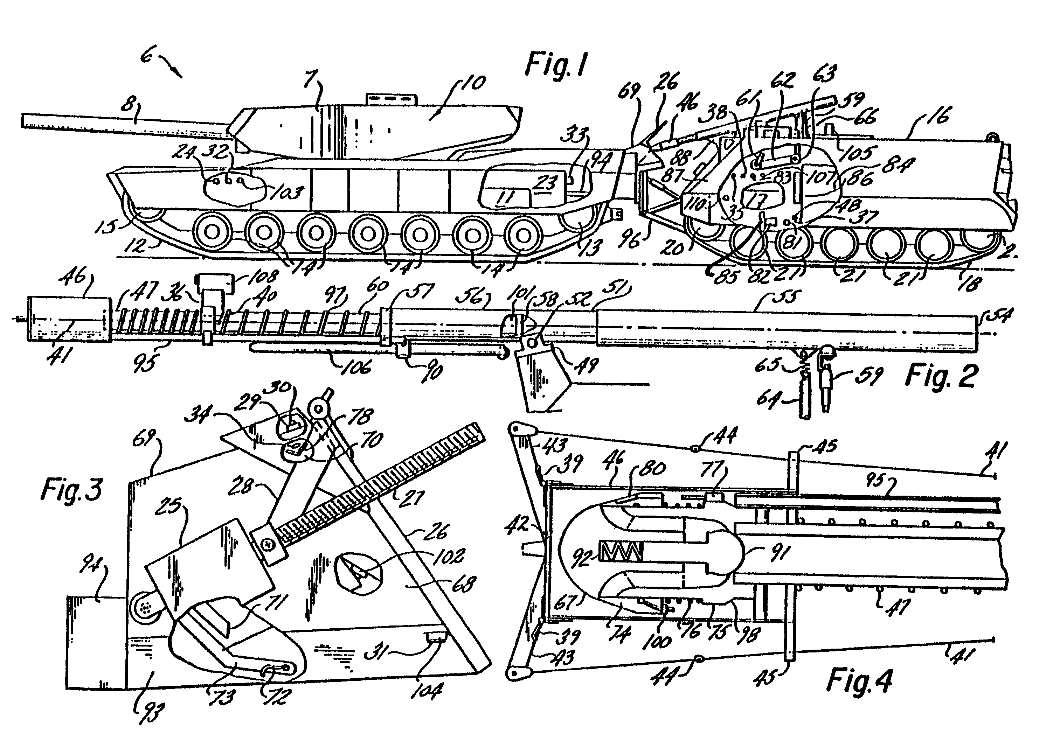

Referring to Figure 1, two armoured vehicles are indicated in the general direction of arrow 6 which comprises a motorized main battle tank 7, having a gun 8, armoured turret 10, and an engine 11 driving track 12 through drive sprocket 13 where road wheels 14 carry the load while idler wheel 15 aligns the track 12. The second vehicle 16 is an armoured personnel carrier, whose engine 17 drives track 18 with drive sprocket 20. Road wheels 21 carry the load while idler wheel 22 aligns the track 18.

When main battle tank 7 runs low on fuel in its tanks 23, it calls for the assistance of refueller vehicle 16. Actuating switch 24 in vehicle 7 energizes motor 25 which opens door 26 by means of screw jack 27 and lever 28. Motor 25 is turned OFF by limit switch 30 when fully open. When door 26 is fully open, limit switches 29 and 31 are actuated which activates door open light 32, float switch 33 and magnetic coil 34.

As refueller vehicle 16 approaches main battle tank 7, the driver actuates switch 35 which activates motors 36, solenoid valve 37 and cover open light 38. By means of reel 40, motors 36 pull cables 41 which open doors 42 by means of lever 43. When stop 44 reaches guide 45, entire cover 46 is pulled back against spring 47. It is then held in the full back position by motors 36.

When solenoid valve 37 is opened, it closes limit switch 48 in the pump relay circuit. Referring to Figure 2, boom 51 is statically balanced on pivot 52 with weight 54 in balance tube 55. Pivots 52 are secured to outer tube 56 which holds roller housing 57. Inside roller housing 58 is mounted on the end of inner tube 60.

The driver of refueller vehicle 16 steers his vehicle to make azimuth alignment adjustments for boom 51 and receptacle 69 in main battle tank 7. For elevation adjustments of boom 51, the driver turns crank 61, which through chain 62 drives pinion 63, driving rack 64. Rack 64 elevates boom 51 through spring 65. Spring 65 and ball and socket mount 66 allow for misalignment of rack 64 with boom 51.

As contact is made between probe head 67 and receptacle bevel walls 68, the last few inches of alignment are forced on to boom 51. As probe head 67 penetrates receptacle opening 70, it forces the inner receptacle door 71 open against spring 72 through lever 73. As probe head 67 continues to penetrate receptacle 69, sleeve 74 of probe 75 contacts receptacle opening 70 and is forced back against spring 76 and limit switch 77. As sleeve 74 seats against receptacle opening seal 78, magnetic switch 80 senses activated magnetic coil 34 and closes. Now, with the magnetic switch 80, the limit switch 77 and the valve limit switch 48 all closed, the pump relay 81 is activated. This closes the circuit which activates the pump motor 82. A pump indicator light 83 also lights at this time. Fuel is now flowing out of a collapsible bladder fuel tank 84 through the pump 85, through the filter 86, out through the glacis plate 87, through armoured hose 88 and into the boom 51 through fitting 90. When fuel pressure strikes the anti drip poppet valve 91, it is forced open against its spring 92. Fuel flows out around probe head 67 and into the receptacle floor 93, where it drains through tubing 94 into fuel tanks 23. The wiring for the magnetic switch 80 and limit switch 77 travel through armoured tube 95. When contact is made between the probe 75 and the receptacle 69, the driver continues to push until solid contact is made between the back of the main battle tank 7 and the shock absorbing bumper 96 on the front of the refueller vehicle 16. This contact ensures proper sealing of the probe sleeve 74 and the receptacle opening seal 78. After contact is made between the probe 75 and the receptacle 69, and movement continues, the inner tube 60 rolls into the outer tube 56 against spring 97. This keeps a nearly constant sealing pressure and prevents damage to the probe 75 during violent engagements. Sleeve 74 to housing 98 movement can be lubricated through fitting 100.

When the main battle tank 7 fuel tanks 23 are full, float switch 33 opens, deactivating magnetic coil 34. Magnetic switch 80 then opens, which opens pump relay 81 and the pump motor 82 stops. At this time, the pump indicator light 83 goes out. When pump indicator light 83 goes out, the driver knows it is time to disconnect. When fuel pressure ceases, anti drip poppet valve 91 is closed by spring 92. When the refueller vehicle 16 backs backs away from the main battle tank 7, inner tube 60 is rolled out of outer tube 56 by spring 97 until spacer 101 is caught between roller housings 57 and 58. Further backing withdraws probe head 67 from receptacle opening 70. This permits inner receptacle door 71 to be closed by spring 72, and sleeve 74 to be closed by spring 76. When inner receptacle door 71 closes, it actuates dual switch 102 which closes the door circuit for motor 25, permitting door 26 to close, and opens the circuit which turns off the probe inserted indicator light 103. When the probe inserted indicator light 103 goes out, the driver of the main battle tank 7 actuates switch 24 which activates motor 25 to close door 26. Motor 25 is turned off by limit switch 104 when door 26 is fully closed. When door 26 closes, limit switch 31, in the magnetic coil 34 circuit, is opened, and limit switch 29 is opened which turns off door open light 32. When clear, the driver of the refueller vehicle 16 actuates switch 35 which stops ourrent to the motors 36, turns off cover open light 38, and closes solenoid valve 37. With no current to the motors 36, spring 47 slides cover 46 forward and permits doors 42 to be closed by springs 39.

The boom 51 is free to pitch on pivot 52 and yaw on swivel mount 49. All movements are dampened by two dampers 59. For long distance travel, the driver of the refueller vehicle 16 operates crank 61 to raise the boom 51 until the balance tube 55 seats in saddle 105. In the event of fire in the receptacle 69 during refuelling, the drive of the refueller vehicle 16 pulls a lever 110 which discharges fire extinguisher from tube 106 mounted on boom 51. For night operations, the driver of refueller vehicle 16 can actuate switch 107 to operate laser aiming lamp 108 or video camera 108.

The apparatus described can be retrofitted to existing vehicles at a lower cost than a new vehicle. The vehicles intended for this apparatus have the same mobility as the tanks they refuel. The vehicle intended for this apparatus is armoured to protect crew and fuel from small arms fire, and sealed and pressurized to prevent entry of chemical contaminants.

The described apparatus has the ability to refuel a tank in one quarter the time of conventional methods.

The described apparatus can refuel an armoured vehicle remotely, i.e. no personnel need drag hoses or open caps.

The refueller is provided with automated systems which permit operation without extensive personnel training.

## Claims

1. Apparatus for remotely transferring fuel between vehicles comprising the combination of: a mobile storage or tanker vehicle (16) for storing liquid fuel and; a mobile fuel consuming vehicle; (7) said storage vehicle (16) having fuel dispensing means including an elongate pivotal telescopic boom (51) outwardly contilevered from a selected end portion of said storage vehicle (16) and terminating at it free end in a nozzle configured for remote operation; a remotely operatable cover (45) for enclosing said nozzle and resiliently carried on said boom (51), said cover (46) including a pair of doors (43) having open and closed positions and being responsive to control means (41) for exposing and covering said nozzle; said fuel consuming vehicle having a receptacle (69) at a selected end thereof for receiving said exposed nozzle to enable the transfer of fuel from said storage vehicle (16) in a remote manner; said boom (51) including a probe (75) about said nozzle for engaging said receptacle (69); and actuation means responsive to said probe engaging said receptacle to initiate the transfer of fuel; said actuation means including magnetic field producing means (34) in said receptacle and a magnetic sensor (80) in said boom probe.

2. Apparatus according to Claim 1 including: spacing means operably carried on said selected ends of said vehicles for abutting engagement to establish a predetermined spacing or distance between said selected ends of said vehicles (16, 7), said predetermined spacing or distance being related to the depth of penetration of said dispensing means within said receptacle means (69).

3. Apparatus according to Claim 1 or to Claim 2 including shock absorbing means operably carried on the front end of said storage vehicle for abutting engagement with said consuming vehicle during a refuelling procedure.

## Patentansprüche

1. Vorrichtung zum fernbetätigten Umfüllen von Kraftstoff zwischen Fahrzeugen, wobei ein bewegliches Kraftstoff verbrauchendes Fahrzeug (7) und ein bewegliches Lagerungsfahrzeug oder Tankfahrzeug (16) zum Speichern von flüssigem Kraftstoff vorgesehen sind, das Kraftstoff abgebende Mittel aufweist, die einen verlängerten, schwenkbaren Teleskopausleger (51) umfassen, der von einem vorgewählten Endabschnitt des Tankfahrzeugs (16) nach außen frei vorschiebbar ist und der an seinem freien Ende in eine zur Fernbetätigung ausgestalteten Düse mündet, mit einer fernbetätigbaren Bedienungsabdeckung (45), um die besagte Düse einzuschließen, und die federnd auf dem besagten Teleskopausleger (51) angeordnet ist, wobei die besagte Abdeckung (46) ein Paar Türen (43) umfaßt, die eine offene und eine geschlossene Position aufweisen und die auf Kontrollmittel (41) reagieren, um die besagte Düse freizulegen oder abzudecken, wobei das Kraftstoff verbrauchende Fahrzeug eine Aufnahme (69) an einem vorgewählten Endabschnitt von ihm zur Aufnahme der freigesetzten Düse aufweist, um das Übertragen von Kraftstoff aus dem besagten Tankfahrzeug (16) in einer automatischen Weise zu ermöglichen, wobei der Teleskopausleger (51) über einen Fühler (75) an der Düse zum Eingreifen in die besagte Aufnahme (69) verfügt, und mit Betätigungsmitteln, die beim Eingreifen des Fühlers in die Aufnahme reagieren, um das Umfüllen des Kraftstoffes zu starten, wobei die Betätigungsmittel ein ein Magnetfeld erzeugendes Mittel (34) in der Aufnahme und einen Magnetmeßfühler (80) in dem Teleskopauslegerfühler umfassen.

2. Vorrichtung nach Anspruch 1 mit Abstandshaltemitteln, die einsatzfähig auf den vorgewählten Endabschnitten der besagten Fahrzeuge zur Schaffung einer Anschlagverbindung angeordnet sind, um einen vorbestimmten Abstand oder Strecke zwischen den vorgewählten Enden der besagten Fahrzeuge (16, 7) zu schaffen, wobei der vorbestimmte Abstand oder die Strecke in Beziehung zu der Tiefe des Eindringens der besagten Kraftstoff abgebenden Mittel in die besagten Aufnahmemittel (69) steht.

3. Vorrichtung nach Anspruch 1 oder nach Anspruch 2, mit einer Stoßdämpfervorrichtung, die einsatzfähig an dem Vorderende des Tankfahrzeugs angeordnet ist, um einen Anschlag für das Kraftstoff verbrauchende Fahrzeug während eines Wiederbetankungsvorgangs zu bilden.

## Revendications

1. Appareil pour le transfert à distance de carburant entre des véhicules comprenant la combinaison de: une réserve mobile ou véhicule citerne (16) pour le stockage de carburant liquide et; un véhicule mobile consommant du carburant (7), le véhicule citerne (16) ayant des moyens de fourniture de carburant comprenant une flèche télescopique allongée pivotante (51) en porte-à-faux vers l'extérieur à partir d'une partie extrême choisie de ce véhicule citerne (16) et se terminant à son extrémité libre par une buse conçue pour un fonctionnement à distance; un capot (45) manœuvrable à distance pour enfermer cette buse et porté élastiquement par la flèche (51), ce capot (46) comprenant une paire de portes (43) ayant des positions d'ouverture et de fermeture et étant sensibles à un moyen de commande (41) pour découvrir et couvrir cette buse; le véhicule consommant de carburant ayant un réservoir (69) à une extrémité choisie de ses extrémités pour recevoir la buse découverte afin de permettre le transfert à distance de carburant provenant du véhicule citerne (16); la flèche (51) comprenant une sonde (75) autour de la buse pour s'engager avec ce réservoir (69); et un moyen de manœuvre sensible à ladite sonde engagée avec ledit réservoir pour déclencher le transfert de carburant; le moyen de manœuvre comprenant un moyen (34) produisant un champ magnétique dans le réservoir et un détecteur magnétique (80) dans le réservoir et un détecteur magnétique (80) dans la sonde de la flèche.

2. Appareil selon la revendication 1, comprenant des moyens d'espacement montés de façon fonctionnelle sur les extrémités choisies desdits véhicules pour s'engager en aboutement afin d'établir un espacement prédéterminé ou distance entre les extrémités choisies des véhicules (16, 7), cet espacement prédéterminé ou distance étant en relation avec la profondeur de pénétration des moyens de fourniture de carburant à l'intérieur du réservoir (69).

3. Appareil selon la revendication 1 ou la revendication 2 comprenant un moyen d'absorption des chocs porté de manière fonctionnelle à l'extrémité avant du véhicule citerne pour s'engager en aboutement avec le véhicule consommant du carburant pendant un processus de ravitaillement.

Fig. 1

Fig. 2

Fig. 3

Fig. 4

EP 0 216 963 B1